# EUROPÄISCHE PATENTSCHRIFT

(11) **EP 2 992 137 B1**
(45) Veröffentlichungstag und Bekanntmachung des Hinweises auf die Patenterteilung: **01.08.2018**
(21) Anmeldenummer: 14719301.5
(22) Anmeldetag: 23.04.2014
(51) Int. Cl.: D21G 1/02, D21F 3/08, D21G 9/00, D21G 1/00, G01L 5/10, G01L 5/00

(54) **SENSORWALZE**
SENSOR ROLL
ROULEAU À CAPTEUR

(30) Priorität: 30.04.2013 DE 102013207889
(43) Veröffentlichungstag der Anmeldung: 09.03.2016
(73) Patentinhaber: Voith Patent GmbH, 89522 Heidenheim (DE)
(72) Erfinder: SCHMITT, Matthias, 81476 München (DE); ECKE, Wolfgang, 07747 Jena (DE); BREINEDER, Martin, A-2620 Natschbach (AT)
(86) Internationale Anmeldenummer: PCT/EP2014/058215
(87) Internationale Veröffentlichungsnummer: WO 2014/177434

(56) Entgegenhaltungen:
- EP-A2- 0 538 221
- WO-A1-2010/034321
- WO-A1-2012/113747
- DE-C1- 10 026 883

## Beschreibung

Die Erfindung betrifft eine Walze für eine Maschine zur Herstellung und/oder Verarbeitung einer Faserstoffbahn, insbesondere Papier-, Karton- oder Tissuebahn mit einem kreiszylindrischen Walzengrundkörper und mit im Bereich der beiden axialen Enden des Grundkörpers angeordneten Lagerzapfen zur rotierbaren Lagerung der Walze um deren Längsachse an einer Stuhlung der Maschine und mit einem die Mantelfläche des Walzengrundkörpers zumindest abschnittsweise bedeckenden Walzenbezug in welchen zumindest ein druck- und/oder temperatursensitiver Sensor eingebettet ist, der mit zumindest einer elektrischen und/oder optischen Signalleitung verbunden ist, welche zum Austausch von Signalen mit einer Signalanregungs- und/oder Signalverarbeitungseinheit verbindbar ist.

Die Erfindung betrifft des Weiteren eine Maschine mit einer Walze mit zumindest einem im Walzenbezug eingebetteten Sensor sowie ein Verfahren zur Messung von Druck und/oder Temperatur.

Walzen mit im Walzenbezug eingebetteten Sensoren zur Messung von Druck und/oder Temperatur werden in bahnverarbeitenden Maschinen eingesetzt, um das Profil im Nip zu erfassen um Fehlstellungen der Walzen im Nip zu erkennen und darauf basierend korrigieren zu können.

Solche Walzen sind bspw. aus der US5562027 oder der WO2010034321, sowie der WO 2012/113747 A1 oder der EP 0 538 221 A2 bekannt.

Nachteilig an den oben genannten bekannten Walzen ist, dass deren Signalverarbeitungseinheit, inkl. Spannungsversorgung sowie ggf. Signalanregungseinheit, dies kann bei optischen Sensoren bspw. eine Lichtquelle umfassen, zumindest teil- oder komponentenweise an der rotierenden Walze fest angebracht sind und daher mit dieser mit rotieren müssen. Dies ist zum einen von Nachteil, da die mitrotierenden Komponenten für hohe Rotationsgeschwindigkeiten ausgelegt sein müssen und zum anderen, da die mitrotierenden Komponenten Platz beanspruchen, der sich in den beengten räumlichen Verhältnissen einer Walze oftmals nur schlecht oder gar nicht unterbringen lässt, wie dies bspw. bei Kalanderwalzen der Fall sein kann. So sind die Komponenten oftmals an einem der Walzendeckel der Walze im Raum zwischen Walzendeckel und Stuhlung oder Walzenlagerung angebracht. Ein weiterer Nachteil von fest an der Walze angebrachten und mit dieser rotierenden Komponenten der Signalverarbeitungseinheit und/oder Signalanregungseinheit ist, dass diese für jede Walze separat zur Verfügung gestellt werden müssen und daher nicht für mehrere Walzen verwendbar sind.

Die vorliegende Erfindung hat sich daher die Aufgabe gestellt, eine Walze mit Sensoren, eine Maschine mit einer solchen Walze und ein Verfahren zum Betreiben einer solchen Walze vorzuschlagen, bei dem die vorgenannten Nachteile nicht mehr vorhanden sind.

Die Aufgabe wird durch eine Walze mit den Merkmalen des Anspruchs 1, durch eine Maschine mit den Merkmalen des Anspruchs 12 und durch ein Verfahren mit den Merkmalen des Anspruchs 17 gelöst.

Dadurch, dass die Signalleitung zumindest einen im Wesentlichen im Inneren der Walze geführten ersten Leitungsabschnitt umfasst, der einendseitig mit dem zumindest einen Sensor verbunden ist, des Weiteren zumindest einen im Wesentlichen außerhalb der Walze geführten und einendseitig mit der Signalanregungs- und/oder Signalverarbeitungseinheit verbindbaren zweiten Leitungsabschnitt sowie eine elektrische und/oder optische Drehverbindung, durch welche der erste und zweite Leitungsabschnitt andernendseitig derart relativ zueinander drehbar miteinander verbunden oder verbindbar sind, dass bei Rotation der Walze um ihre Längsachse der erste Leitungsabschnitt zusammen mit dem Walzengrundkörper rotiert wohingegen der zweite Leitungsabschnitt dieser Rotationsbewegung nicht folgen muss, kann die komplette Signalanregungs- und/oder Signalverarbeitungseinheit unabhängig von der Walze, d.h. außerhalb der rotierenden Walze angeordnet und nicht drehfest mit dieser verbunden, platziert werden. Eine kabellose, bspw. WLAN, Übertragung von vorverarbeiteten Daten von der rotierenden Walze die einen Teil der Signalverarbeitungseinheit umfasst, zu unabhängig von der Walze angeordneten Komponenten der Signalverarbeitungseinheit ist nicht mehr notwendig. Ferner ist eine mit der Walze mitrotierende Energieversorgungseinheit, bspw. induktive Energieversorgungseinheit, nicht mehr notwendig. Da die Signalanregungs- und/oder Signalverarbeitungseinheit unabhängig von der Walze platzierbar ist, ist die Signalanregungs- und/oder Signalverarbeitungseinheit jederzeit für Wartungs- und/oder Instandsetzungsarbeiten zugänglich. Ferner ist der Platzbedarf der erfindungsgemäßen Walze deutlich reduziert, da an deren Deckel keine Komponenten der Signalanregungs- und/oder Signalverarbeitungseinheit montiert sind. Dadurch, dass ferner die Walze ohne eigene Signalanregungs- und/oder Signalverarbeitungseinheit ausgestattet ist, kann eine einzige Signalanregungs- und/oder Signalverarbeitungseinheit für mehrere Walzen verwendet werden. Dies spart Investitionskosten. Darüber hinaus kann eine einzige Signalanregungs- und/oder Signalverarbeitungseinheit für die Messung von Druck- und/oder Temperatur mehrerer Walzen, bspw. im Rahmen von Messungen als Servicedienstleistung, verwendet werden.

Wenn im Rahmen der vorliegenden Erfindung ganz allgemein davon die Rede ist, dass die Leitungsabschnitte, die Drehverbindung, der oder die Sensor(en) und die Signalerregungs- und/oder Signalauswertungseinheit miteinander verbunden sind bzw. verbindbar sind, dann ist in der allgemeinsten Auslegung dieses Begriffs eine Verbindung funktionaler Art darunter zu verstehen, die es ermöglicht, Signale zwischen dem oder den Sensor(en) und der Signalerregungs- und/oder Signalauswertungseinheit mittels der Signalleitung auszutauschen und zwar unabhängig davon, wie die Verbindung konstruktiv hergestellt ist. Demzufolge macht der Begriff Verbindung keine Einschränkung dahingehend, dass bspw. der oder die Sensor(en) und der erste Leitungsabschnitt zwei voneinander unabhängig hergestellte Bauteile sein müssen, die nachträglich zusammengefügt wurden. Denkbar ist vielmehr auch, dass bspw. der oder die Sensor(en) und der erste Leitungsabschnitt als ein einziges Bauteil hergestellt sind, wie dies bspw. bei faseroptischen Sensoren der Fall sein kann, die integraler Bestandteil des Lichtwellenleiters sind. Unabhängig davon ist es aber auch möglich, dass der oder die Sensor(en) und der erste Leitungsabschnitt zwei voneinander unabhängig hergestellte Bauteile sind, die nachträglich zusammengefügt wurden, wie dies bspw. bei piezoelektrischen Sensoren der Fall sein kann, die unabhängig von der elektrischen Signalleitung hergestellt und nachträglich mit dieser verbunden sind.

Wenn im Rahmen der vorliegenden Erfindung von einer Signalanregungs- und/oder Signalverarbeitungseinheit die Rede ist, muss dies nicht notwendigerweise bedeuten, dass eine Signalanregungs- und eine Signalverarbeitungseinheit vorhanden sein ist. Sind sowohl eine Signalanregungs- als auch eine Signalverarbeitungseinheit vorhanden, müssen diese nicht notwendigerweise eine einzige Einheit bilden, sondern können voneinander unabhängige Einheiten sein, die im selben oder in unterschiedlichen Gehäusen angeordnet sind. Denkbar ist auch, dass Komponenten der Signalanregungseinheit und der Signalauswertungseinheit in einem ersten Gehäuse zusammengefasst sind und andere Komponenten der Signalanregungseinheit und der Signalauswertungseinheit in einem zweiten Gehäuse zusammengefasst sind.

Vorteilhafte Ausgestaltungen und Weiterbildungen der Erfindung sind in den Unteransprüchen angegeben.

Nach einer konkreten Ausgestaltung der Erfindung ist vorgesehen, dass der erste Leitungsabschnitt im Wesentlichen in dem Walzenbezug und/oder im Inneren des kreiszylindrischen Walzengrundkörper geführt ist und insbesondere drehfest mit dem Walzenbezug und/oder dem Walzengrundkörper verbunden ist (Bem: drehfest bedeutet in diesem Zusammenhang, dass bei Rotation des Walzengrundkörpers der erste Leitungsabschnitt durch den Walzenbezug und/oder dem Walzengrundkörper mitgenommen wird und daher zusammen mit dem Walzengrundkörper und dem Walzenbezug rotiert).

Vorzugsweise ist der zweite Leitungsabschnitt lösbar oder unlösbar mit der Drehverbindung verbunden bzw. verbindbar. Eine lösbare Verbindbarkeit von zweitem Leitungsabschnitt und Drehverbindung ist bspw. dann denkbar, wenn das eine Ende des zweiten Leitungsabschnitts fest mit der Signalerregungs- und/oder Signalauswertungseinheit verbunden ist. Eine unlösbare Verbindbarkeit von zweitem Leitungsabschnitt und Drehverbindung ist bspw. dann denkbar, wenn das eine Ende des zweiten Leitungsabschnitts lösbar mit der Signalerregungs- und/oder Signalauswertungseinheit verbunden ist. Selbstverständlich ist es auch denkbar, dass der zweite Leitungsabschnitt sowohl lösbar mit der Drehverbindung als auch lösbar mit der Signalerregungs- und/oder Signalauswertungseinheit verbunden ist.

Unter einer lösbaren Verbindung ist eine Verbindung zu verstehen, die ohne den Verbindungsmechanismus zu zerstören mehrmals gelöst und wieder hergestellt werden kann. Eine lösbare Verbindung kann bspw. mittels einer Steckverbindung, einer Klippsverbindung, einer Schraubverbindung hergestellt werden. Vorzugsweise wird hierbei eine standardisierte lösbare Verbindung gewählt, bei der die Verbindungselemente standardisierte Komponenten sind.

Unter einer unlösbaren Verbindung ist eine Verbindung zu verstehen, die nur durch Zerstörung des Verbindungsmechanismus wieder gelöst werden kann. Eine unlösbare Verbindung kann bspw. mittels einer Klebeverbindung, einer Spleißverbindung (bspw. bei Lichtwellenleiter) oder einer Crimp-Verbindung (bspw. bei elektrischen Leitern wie bspw. Kupferkabel) hergestellt werden.

Nach einer konkreten Ausgestaltung der Erfindung umfasst die Drehverbindung ein erstes und ein zweites Verbindungsstück, wobei die beiden Verbindungsstücke aneinander relativ zueinander um eine Drehachse drehbar gelagert sind und der erste Leitungsabschnitt andernendseitig mit dem ersten Verbindungsstück und der zweite Leitungsabschnitt andernendseitig mit dem zweiten Verbindungsstück verbunden ist oder verbindbar ist.

Denkbar ist ferner, dass der zweite Leitungsabschnitt lösbar mit der Signalanregungs- und/oder Signalverarbeitungseinheit verbindbar ist.

Nach einer weiteren bevorzugten Ausgestaltung der Erfindung ist vorgesehen, dass die Drehverbindung an einem Lagerzapfen, insbesondere am freien stirnseitigen Ende eines Lagerzapfens angeordnet ist. Hierbei ist es insbesondere von Vorteil, wenn die Signalleitung im Bereich der Drehverbindung aus der Walze geführt ist. Dies ist nach einer möglichen konstruktiven Ausgestaltung bspw. möglich, indem das erste Verbindungsstück ins Innere der Walze weist und das zweite Verbindungsstück aus der Walze heraus weist, bsw. sich im Wesentlichen außerhalb der Walze erstreckt.

Vorzugsweise ist ferner vorgesehen, dass das erste Verbindungsstück drehfest an dem Lagerzapfen befestigt ist. Drehfest bedeutet in diesem Zusammenhang, dass das erste Verbindungsstück relativ zum Lagerzapfen nicht drehbar ist.

Nach einer weiteren konkreten Ausgestaltung der Erfindung ist es vorgesehen, dass die Drehverbindung derart an der Walze angeordnet ist, dass die Drehachse der beiden Verbindungsstücke und die Drehachse der Walze zusammenfallen. In diesem Zusammenhang ist es insbesondere denkbar, dass die beiden Verbindungsstücke durch deren Längserstreckung und relativen Anordnung zueinander gemeinsam eine Längsachse der Drehverbindung festlegen, die die Drehachse der beiden Verbindungsstücke relativ zueinander festlegt und die mit der Drehachse -diese entspricht der Längsachse- der Walze zusammenfällt.

Es sind verschiedene Arten von Sensoren möglich, die in der erfindungsgemäßen Walze zum Einsatz kommen können.

Nach einer möglichen Ausführungsform der Erfindung ist vorgesehen, dass der zumindest eine Sensor ein piezoelektrischer Sensor und die Signalleitung eine elektrische Leitung ist.

In diesem Zusammenhang ist es insbesondere denkbar, dass mehrere erste elektrische Leitungsabschnitte mit jeweils einendseitig verbundenem Sensor vorgesehen sind, die jeweils andernendseitig mit dem ersten Verbindungsstück verbunden sind. Bei dem Drehverbinder kann es sich hierbei um einen elektrischen Drehverbinder, insbesondere um einen Schleifringübertrager handeln.

Nach einer dazu alternativen Ausführungsform ist es denkbar, dass der zumindest eine Sensor ein optischer, insbesondere ein faseroptischer Sensor, wie bspw. Faser-Bragg-Sensor ist und dass die Signalleitung ein Lichtwellenleiter ist. Denkbar ist in diesem Zusammenhang insbesondere, dass der erste Leitungsabschnitt einendseitig mit zumindest einem Sensorabschnitt verbunden ist, der mehrere in Reihe hintereinander angeordnete faseroptische Sensoren bereitstellt. Hierbei können der erste Leitungsabschnitt und der Sensorabschnitt bspw. aus einem einzigen Bauteil bestehen, d.h. einstückig ausgebildet sein. Denkbar ist auch, dass der erste Leitungsabschnitt und der Sensorabschnitt aus mehreren voneinander unabhängigen Bauteilen bestehen, die nachträglich miteinander verbunden wurden.

Denkbar ist auch, dass mehrere mit dem ersten Leitungsabschnitt verbundene Sensorabschnitte bereitstellt sind.

Denkbar ist des Weiteren, dass mehrere Sensorabschnitte mit jeweils mehreren in Reihe hintereinander angeordneten Sensoren vorgesehen sind. Im Fall, dass der bzw. die Sensor(en) optische Sensoren sind bzw. ist, kann es sich bei dem Drehverbinder um einen optischen Drehverbinder, insbesondere um einen faseroptischen Drehverbinder handeln. Für die Erfindung geeignete faseroptische Drehverbinder werden bspw. von der Fa. Princetel, Inc., Pennington, NJ08534 (www.princetel.com) angeboten.

Die Walze kann insbesondere einen Durchmesser kleiner 850 mm, insbesondere einen Durchmesser im Bereich von 100 mm - 800 mm haben. Bei solchen Walzen findet die erfindungsgemäße Lösung bevorzugt Anwendung, da diese Walzen aufgrund deren kleinen Durchmesser bis dato nicht für die Ausstattung mit Sensoren geeignet waren, da auch Komponenten der Signalerregungs- und/oder Signalverarbeitungseinheit bei den dort vorgegebenen beengten Raumverhältnissen nicht unterzubringen waren.

Nach einem zweiten Aspekt der Erfindung wird eine Maschine zur Herstellung und/oder Verarbeitung einer Faserstoffbahn, insbesondere Papier-, Karton- oder Tissuebahn mit einer um deren Längsachse drehbaren erfindungsgemäßen Walze und mit einer über die Signalleitung mit der Walze verbundenen Signalanregungs- und/oder Signalverarbeitungseinheit unter Schutz gestellt, die dadurch gekennzeichnet ist, dass die Signalanregungs- und/oder Signalverarbeitungseinheit nicht -auch nicht nur teil- oder komponentenweise- drehfest an der Walze befestigt ist und sich daher bei Rotation der Walze um deren Längsachse nicht mit der Walze mit dreht.

Dies bedeutet, dass die Signalanregungs- und/oder Signalverarbeitungseinheit unabhängig von der rotierenden Walze platziert ist, und bspw. an der Maschinenstuhlung befestigt ist.

Vorzugsweise ist die Signalanregungs- und/oder Signalverarbeitungseinheit eine mobile Signalerzeugungs- und/oder Signalverarbeitungseinheit. Denkbar ist in diesem Zusammenhang insbesondere, dass die Signalerzeugungs- und/oder Signalverarbeitungseinheit eine tragbare oder fahrbare Einheit ist, die zur Durchführung von Messungen zur jeweiligen Sensorwalze gebracht und mit dieser verbunden wird.

Vorzugsweise ist in diesem Zusammenhang die Signalanregungs- und/oder Signalverarbeitungseinheit lösbar mit dem zweiten Leitungsabschnitt verbindbar.

Handelt es sich bei dem zumindest einen Sensor um einen optischen Sensor, so ist nach einer konkreten Ausgestaltung vorzugsweise vorgesehen, dass die Signalanregungseinheit eine Lichtquelle umfasst. Des Weiteren kann in diesem Zusammenhang vorgesehen sein, dass die Signalverarbeitungseinheit einen Lichtempfänger, insbesondere ein Spektrometer mit Polychromator und/oder einen Datenrechner umfasst.

Vorzugsweise bildet die Walze mit einem Gegenelement, insbesondere einer Gegenwalze, einen Nip.

Nach einem dritten Aspekt der Erfindung wird ein Verfahren zum Messen von Druck und/oder Temperatur in einer erfindungsgemäßen Walze vorgeschlagen, bei dem eine mobile Signalanregungs- und/oder Signalverarbeitungseinheit verwendet wird, die zur Durchführung einer Messung mittels dem zweiten Leitungsabschnitt lösbar mit der Walze verbunden wird und nach der Durchführung der Messung wieder von der Walze getrennt wird.

Durch die Bereitstellung einer lösbar mit der Walze verbindbaren Signalanregungs- und/oder Signalverarbeitungseinheit können mit ein und derselben Signalanregungs- und/oder Signalverarbeitungseinheit Druck- und/oder Temperaturmessungen an verschiedenen Sensorwalzen durchgeführt werden. Hierdurch werden Investitionskosten für eine teure Signalanregungs- und/oder Signalverarbeitungseinheit gespart. Des Weiteren kann als Teil einer Servicedienstleistung für unterschiedlichste Kunden mit ein und derselben Signalanregungs- und/oder Signalverarbeitungseinheit der Druck und/oder die Temperatur einer Sensorwalze gemessen werden.

Die Erfindung wird nachfolgend anhand von schematischen Zeichnungen weiter erläutert. Es zeigen
- Fig. 1: eine Ausführungsform einer erfindungsgemäßen Maschine mit einer erfindungsgemäßen Walze und
- Fig. 2: eine Ausführungsform eines in der erfindungsgemäßen Walze zum Einsatz kommenden Drehverbinders.

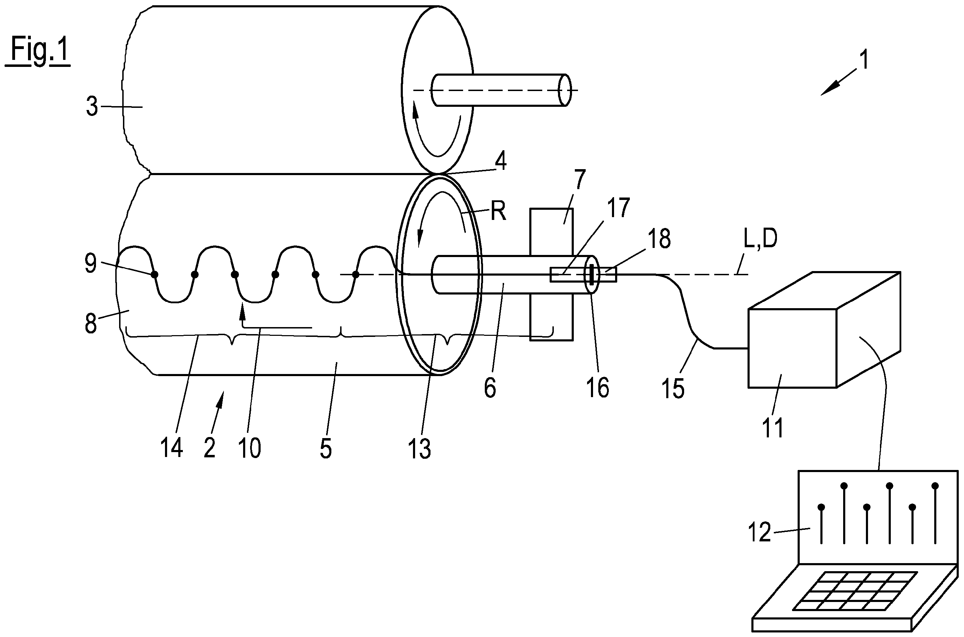

Die Figur 1 zeigt eine Ausführungsform einer erfindungsgemäßen Maschine 1 mit einer Walze 2 -nachfolgend Sensorwalze 2 genannt- , die mit einer Gegenwalze 3 einen Nip 4 bildet.

Die Sensorwalze 2 hat einen kreiszylindrischen Walzengrundkörper 5 und im Bereich der beiden axialen Enden des Grundkörpers 5 angeordnete Lagerzapfen 6 von denen ein Lagerzapfen 6 vorliegend zu erkennen ist, zur rotierbaren Lagerung der Sensorwalze 2 um deren Längsachse L an einer Stuhlung 7 der Maschine.

Die Sensorwalze 2 hat einen die Mantelfläche des Walzengrundkörpers 5 im Wesentlichen bedeckenden Walzenbezug 8, in welchen mehrere drucksensitive Sensoren 9 eingebettet sind, die vorliegend als faseroptische Sensoren 9 in Form von Faser-Bragg-Sensoren ausgebildet sind.

Die Sensoren 9 sind mittels einer faseroptischen Signalleitung 10 in Form eines Lichtwellenleiters zum Austausch von Signalen mit einer ersten Signalanregungs- und Signalverarbeitungseinheit 11 lösbar verbunden. Die erste Signalanregungs- und Signalverarbeitungseinheit 11 ist wiederum mittels der Signalleitung 10 mit einer zweiten Signalverarbeitungseinheit 12 verbunden.

Die Signalleitung 10 umfasst einen im Inneren der Sensorwalze geführten ersten Leitungsabschnitt 13, der einendseitig mit einem Sensorabschnitt 14 verbunden ist, der die mehreren in Reihe hintereinander angeordneten faseroptische Sensoren 9 bereitstellt. Des Weiteren umfasst die Signalleitung 10 einen vorliegend außerhalb der Sensorwalze 2 geführten und einendseitig mit der ersten Signalanregungs- und Signalverarbeitungseinheit 11 und der zweiten Signalverarbeitungseinheit 12 lösbar verbundenen zweiten Leitungsabschnitt 15 sowie eine optische Drehverbindung 16, durch welche der erste Leitungsabschnitt 13 und der zweite Leitungsabschnitt 15 andernendseitig derart relativ zueinander drehbar miteinander verbunden sind, dass bei Rotation R der Sensorwalze 2 um ihre Längsachse L der erste Leitungsabschnitt 13 zusammen mit dem Walzengrundkörper 5 rotiert wohingegen der zweite Leitungsabschnitt 15 dieser Rotationsbewegung R nicht folgen muss.

Vorliegend ist der zweite Leitungsabschnitt 15 lösbar mit der optischen Drehverbindung 16 nach Art einer Steck- und/oder Schraubverbindung verbunden.

Wie aus der Darstellung der Figur 1 zu erkennen ist, ist die Drehverbindung 16 am freien stirnseitigen Ende des Lagerzapfens 6 angeordnet und drehfest an diesem befestigt. Ferner ist der erste Leitungsabschnitt 13 im Wesentlichen im Walzenbezug 8 geführt.

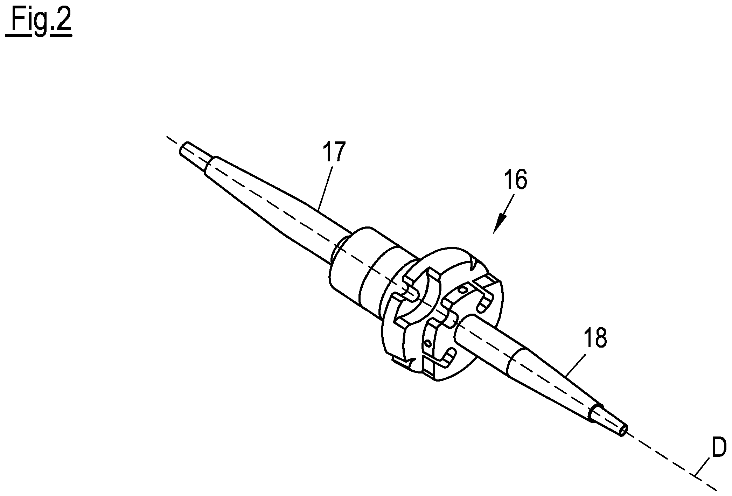

Wie aus der Figur 2 zu erkennen ist, umfasst die Drehverbindung 16 ein erstes und ein zweites Verbindungsstück 17, 18, die aneinander relativ zueinander um eine Drehachse D drehbar gelagert sind, wobei der erste Leitungsabschnitt 13 andernendseitig mit dem ersten Verbindungsstück 17 und der zweite Leitungsabschnitt 15 andernendseitig mit dem zweiten Verbindungsstück 18 verbunden ist. Wie zu erkennen ist, legen die beiden Verbindungsstücke 17, 18 durch deren Längserstreckung und relativen Anordnung zueinander, gemeinsam eine Längsachse der Drehverbindung fest, die die Drehachse D der beiden Verbindungsstücke 17, 18 relativ zueinander festlegt.

Vorliegend ist das erste Verbindungsstück 17 drehfest am Lagerzapfen 6 befestigt, wobei die Drehverbindung 16 derart angeordnet ist, dass die Drehachse D der beiden Verbindungsstücke 17, 18 und die Drehachse L der Sensorwalze zusammenfallen.

Die erste Signalanregungs- und Signalverarbeitungseinheit 11 umfasst eine Lichtquelle und einen Lichtempfänger in Form eines Spektrometers mit Polychromator sowie einen ersten Datenrechner zur Vorverarbeitung der Signale der Sensoren 9. Die beiden Einheiten 11, 12 sind untereinander miteinander verbunden, wobei die zweite Signalverarbeitungseinheit 12 einen Datenrechner zur Weiterverarbeitung der vorverarbeiteten Signale und einen Bildschirm zur graphischen Darstellung der verarbeiteten Signale umfasst. Die Einheiten 11, 12 sind als mobile Einheiten ausgeführt, die zur Durchführung von Messungen an verschiedenen Sensorwalzen lösbar mit diesen verbindbar und nach Durchführung der Messungen wieder von diesen trennbar sind.

## Patentansprüche

1. Walze (2) für eine Maschine zur Herstellung und/oder Verarbeitung einer Faserstoffbahn, insbesondere Papier-, Karton- oder Tissuebahn mit einem kreiszylindrischen Walzengrundkörper (5) und mit im Bereich der beiden axialen Enden des Grundkörpers angeordneten Lagerzapfen (6) zur rotierbaren Lagerung der Walze (2) um deren Längsachse an einer Stuhlung (7) der Maschine und mit einem die Mantelfläche des Walzengrundkörpers (5) zumindest abschnittsweise bedeckenden Walzenbezug (8) in welchen zumindest ein druck- und/oder temperatursensitiver Sensor (9) eingebettet ist, der mittels zumindest einer elektrischen und/oder optischen Signalleitung (10) zum Austausch von Signalen mit einer Signalanregungs- und/oder Signalverarbeitungseinheit (11,12) verbindbar ist, **dadurch gekennzeichnet, dass** die Signalleitung (10) zumindest einen im Wesentlichen im Inneren der Walze (2) geführten ersten Leitungsabschnitt (13) umfasst, der einendseitig mit dem zumindest einen Sensor (9) verbunden ist, des Weiteren zumindest einen im Wesentlichen außerhalb der Walze (2) geführten und einendseitig mit der Signalanregungs- und/oder Signalverarbeitungseinheit (11,12) verbindbaren zweiten Leitungsabschnitt (15) sowie eine elektrische und/oder optische Drehverbindung (16), durch welche der erste (13) und zweite Leitungsabschnitt (15) andernendseitig derart relativ zueinander drehbar miteinander verbunden oder verbindbar sind, dass bei Rotation der Walze (2) um ihre Längsachse der erste Leitungsabschnitt (13) zusammen mit dem Walzengrundkörper (5) rotiert wohingegen der zweite Leitungsabschnitt (15) dieser Rotationsbewegung nicht folgen muss.

2. Walze (2) nach Anspruch 1, **dadurch gekennzeichnet, dass** der zweite Leitungsabschnitt (15) lösbar oder unlösbar mit der Drehverbindung (16) verbunden bzw. verbindbar ist.

3. Walze (2) nach Anspruch 1 oder 2, **dadurch gekennzeichnet, dass** die Drehverbindung (16) ein erstes und ein zweites Verbindungsstück (17,18) umfasst, die relativ zueinander um eine Drehachse drehbar gelagert sind, wobei der erste Leitungsabschnitt (13) andernendseitig mit dem ersten Verbindungsstück (17) und der zweite Leitungsabschnitt (15) andernendseitig mit dem zweiten Verbindungsstück (18) verbunden oder verbindbar ist.

4. Walze (2) nach einem der vorangehenden Ansprüche, **dadurch gekennzeichnet, dass** die Drehverbindung (16) an einem Lagerzapfen (6), insbesondere am freien stirnseitigen Ende eines Lagerzapfens (6) angeordnet ist.

5. Walze (2) nach einem der vorangehenden Ansprüche, **dadurch gekennzeichnet, dass** die Drehverbindung (16) derart an der Walze angeordnet ist, dass die Drehachse der beiden Verbindungsstücke (17,18) und die Drehachse der Walze (2) zusammenfallen.

6. Walze (2) nach einem der vorangehenden Ansprüche, **dadurch gekennzeichnet, dass** der zumindest eine Sensor (9) ein piezoelektrischer Sensor (9) und die Signalleitung (10) eine elektrische Leitung ist, wobei der Drehverbinder ein elektrischer Drehverbinder, insbesondere ein Schleifringübertrager ist.

7. Walze (2) nach einem der vorangehenden Ansprüche 1-6, **dadurch gekennzeichnet, dass** der zumindest eine Sensor (9) ein optischer, insbesondere faseroptischer Sensor (9), wie bspw. Faser-Bragg-Sensor (9) und die Signalleitung (10) ein Lichtwellenleiter (10) ist, wobei der Drehverbinder ein optischer Drehverbinder, insbesondere ein faseroptischer Drehverbinder ist.

8. Walze (2) nach Anspruch 7, **dadurch gekennzeichnet, dass** der erste Leitungsabschnitt (13) einendseitig mit zumindest einem Sensorabschnitt (14) verbunden ist, der mehrere in Reihe hintereinander angeordnete faseroptische Sensoren (9) bereitstellt.

9. Walze (2) nach Anspruch 8, **dadurch gekennzeichnet, dass** mehrere Sensorabschnitte (14) bereitstellt sind.

10. Walze (2) nach einem der vorangehenden Ansprüche, **dadurch gekennzeichnet, dass** der erste Leitungsabschnitt (13) der Signalleitung (10) im Wesentlichen in dem Walzenbezug (8) und/oder im Inneren des kreiszylindrischen Walzengrundkörper (5) geführt ist.

11. Walze (2) nach einem der vorangehenden Ansprüche, **dadurch gekennzeichnet, dass** die Walze (2) einen Durchmesser kleiner 850 mm, insbesondere im Bereich von 100 mm - 800 mm hat.

12. Maschine (1) zur Herstellung und/oder Verarbeitung einer Faserstoffbahn, insbesondere Papier-, Karton- oder Tissuebahn mit einer um deren Längsachse drehbaren Walze (2) nach einem der vorangehenden Ansprüche und mit einer über die Signalleitung (10) mit der Walze (2) verbundenen Signalanregungs- und/oder Signalverarbeitungseinheit (11,12), **dadurch gekennzeichnet, dass** die Signalanregungs- und/oder Signalverarbeitungseinheit (11,12) nicht an der Walze (2) angeordnet ist und sich daher bei Drehung der Walze (2) um deren Längsachse nicht mit der Walze (2) mit dreht.

13. Maschine (1) nach Anspruch 12, **dadurch gekennzeichnet, dass** die Signalanregungs- und/oder Signalverarbeitungseinheit (11,12) eine mobile Signalerzeugungs- und/oder Signalverarbeitungseinheit (11,12) ist.

14. Maschine (1) nach Anspruch 12 oder 13, **dadurch gekennzeichnet, dass** die Signalanregungs- und/oder Signalverarbeitungseinheit (11,12) lösbar mit dem zweiten Leitungsabschnitts (15) verbindbar ist.

15. Maschine (1) nach einem der vorangehenden Ansprüche 12-14, **dadurch gekennzeichnet, dass** die Signalanregungseinheit (11) eine Lichtquelle umfasst und/oder dass die Signalverarbeitungseinheit (11,12) einen Lichtempfänger, insbesondere ein Spektrometer mit Polychromator und/oder einen Datenrechner umfasst.

16. Maschine (1) nach einem der vorangehenden Ansprüche 12-15, **dadurch gekennzeichnet, dass** die Walze (2) mit einem Gegenelement, insbesondere einer Gegenwalze (3), einen Nip (4) bildet in dem Druck und/oder Temperatur gemessen wird.

17. Verfahren zum Messen von Druck und/oder Temperatur in einer Walze (2) nach einem der Ansprüche 1-11 bei dem eine mobile Signalanregungs- und/oder Signalverarbeitungseinheit (11,12) verwendet wird, die zur Durchführung einer Messung mit dem zweiten Leitungsabschnitt (15) verbunden wird und nach der Durchführung der Messung wieder vom zweiten Leitungsabschnitt (15) getrennt wird.

## Claims

1. Roll (2) for a machine for producing and/or processing a fibrous web, in particular a paper, board or tissue web, comprising a circularly cylindrical main roll body (5), bearing journals (6) arranged in the region of the two axial ends of the main body for rotatably supporting the roll (2) about the longitudinal axis thereof on a frame (7) of the machine, and a roll cover (8) which covers the circumferential surface of the main roll body (5), at least in some segments, and in which there is embedded at least one pressure- and/or temperature-sensitive sensor (9), which can be connected to a signal excitation and/or signal processing unit (11, 12) by means of at least one electrical and/or optical signal line (10) for the exchange of signals, **characterized in that** the signal line (10) comprises at least one first line segment (13) extending substantially in the interior of the roll (2), which is connected to the at least one sensor (9) at one end, furthermore at least one second line segment (15) extending substantially outside the roll (2) and connectable to the signal excitation and/or signal processing unit (11, 12) at one end, and an electrical and/or optical rotational connection (16), by means of which the first (13) and second line segment (15) are or can be connected to each other at the other ends thereof in such a way that said line segments can be rotated in relation to each other and in such a way that, when the roll (2) is rotated about the longitudinal axis thereof, the first line segment (13) rotates together with the main roll body (5), whereas the second line segment (15) does not have to follow this rotational movement.

2. Roll (2) according to Claim 1, **characterized in that** the second line segment (15) is or can be connected detachably or non-detachably to the rotational connection (16).

3. Roll according to Claim 1 or 2, **characterized in that** the rotational connection (16) comprises a first and a second connecting piece (17, 18), which are mounted such that they can rotate relative to one another about an axis of rotation, wherein the first line segment (13) is or can be connected to the first connecting piece (17) at another end, and the second line segment (15) is or can be connected to the second connecting piece (18) at another end.

4. Roll (2) according to one of the preceding claims, **characterized in that** the rotational connection (16) is arranged on a bearing journal (6), in particular at the free front end of a bearing journal (6).

5. Roll (2) according to one of the preceding claims, **characterized in that** the rotational connection (16) is arranged on the roll in such a way that the axis of rotation of the two connecting pieces (17, 18) and the axis of rotation of the roll (2) coincide.

6. Roll (2) according to one of the preceding claims, **characterized in that** the at least one sensor (9) is a piezoelectric sensor (9) and the signal line (10) is an electrical line, wherein the rotary connector is an electric rotary connector, in particular a slip-ring transmitter.

7. Roll (2) according to one of the preceding Claims 1-6, **characterized in that** the at least one sensor (9) is an optical sensor (9), in particular a fiber-optic sensor (9), such as a fiber Bragg sensor (9), for example, and the signal line (10) is an optical fiber (10), wherein the rotary connector is an optical rotary connector, in particular a fiber-optic rotary connector.

8. Roll (2) according to Claim 7, **characterized in that** the first line segment (13) is connected at one end to at least one sensor segment (14) which provides a plurality of fiber-optic sensors (9) arranged one after another in series.

9. Roll (2) according to Claim 8, **characterized in that** a plurality of sensor segments (14) are provided.

10. Roll (2) according to one of the preceding claims, **characterized in that** the first line segment (13) of the signal line (10) extends substantially in the roll cover (8) and/or in the interior of the circularly cylindrical main roll body (5).

11. Roll (2) according to one of the preceding claims, **characterized in that** the roll (2) has a diameter of less than 850 mm, in particular in the range from 100 mm - 800 mm.

12. Machine (1) for producing and/or processing a fibrous web, in particular a paper, board or tissue web, with a roll (2) that can be rotated about the longitudinal axis thereof according to one of the preceding claims, and with a signal excitation and/or signal processing unit (11, 12) connected to the roll (2) via the signal line (10), **characterized in that** the signal excitation and/or signal processing unit (11, 12) is not arranged on the roll (2) and therefore does not rotate with the roll (2) during rotation of the roll (2) about the longitudinal axis thereof.

13. Machine (1) according to Claim 12, **characterized in that** the signal excitation and/or signal processing unit (11, 12) is a mobile signal generating and/or signal processing unit (11, 12).

14. Machine (1) according to Claim 12 or 13, **characterized in that** the signal excitation and/or signal processing unit (11, 12) can be connected detachably to the second line segment (15).

15. Machine (1) according to one of the preceding Claims 12-14, **characterized in that** the signal excitation unit (11) comprises a light source and/or **in that** the signal processing unit (11, 12) comprises a light receiver, in particular a spectrometer with polychromator and/or a data computer.

16. Machine (1) according to one of the preceding Claims 12-15, **characterized in that** the roll (2) forms a nip (4), in which pressure and/or temperature are measured, with an opposing element, in particular an opposing roll (3).

17. Method for measuring pressure and/or temperature in a roll (2) according to one of Claims 1-11 in which use is made of a mobile signal excitation and/or signal processing unit (11, 12) which, in order to carry out a measurement, is connected to the second line segment (15) and is separated from the second line segment (15) again after the measurement has been carried out.

## Revendications

1. Rouleau (2) pour une machine de fabrication et/ou d'amélioration d'une bande fibreuse, en particulier d'une bande de papier, carton ou papier-tissu, comprenant un corps de base de rouleau cylindrique circulaire (5) et des tourillons (6) disposés dans la région des deux extrémités axiales du corps de base, pour le support rotatif du rouleau (2) autour de son axe longitudinal sur un bâti (7) de la machine et comprenant un revêtement de rouleau (8) recouvrant au moins en partie la surface d'enveloppe du corps de base de rouleau (5), dans lequel est noyé au moins un capteur (9) sensible à la pression et/ou à la température, lequel peut être connecté au moyen d'au moins une ligne de signal électrique et/ou optique (10) pour l'échange de signaux avec une unité d'impulsion et/ou de traitement de signaux (11, 12), **caractérisé en ce que** la ligne de signal (10) comprend au moins une première portion de ligne (13) guidée essentiellement à l'intérieur du rouleau (2), qui est connectée à une extrémité à l'au moins un capteur (9), en outre au moins une deuxième portion de ligne (15) guidée essentiellement à l'extérieur du rouleau (2) et pouvant être connectée à une extrémité à l'unité d'impulsion et/ou de traitement de signaux (11, 12) ainsi qu'une connexion rotative électrique et/ou optique (16), par le biais de laquelle les première (13) et deuxième (15) portions de ligne sont ou peuvent être connectées l'une à l'autre du côté de l'autre extrémité de manière rotative l'une par rapport à l'autre de telle sorte que, lors de la rotation du rouleau (2) autour de son axe longitudinal, la première portion de ligne (13) tourne conjointement avec le corps de base de rouleau (5) tandis que la deuxième portion de ligne (15) ne doit pas forcément suivre ce mouvement de rotation.

2. Rouleau (2) selon la revendication 1, **caractérisé en ce que** la deuxième portion de ligne (15) est ou peut être connectée de manière détachable ou permanente à la connexion rotative (16).

3. Rouleau (2) selon la revendication 1 ou 2, **caractérisé en ce que** la connexion rotative (16) comprend une première et une deuxième pièce de connexion (17, 18) qui sont supportées l'une par rapport à l'autre de manière rotative autour d'un axe de rotation, la première portion de ligne (13) étant ou pouvant être connectée du côté de l'autre extrémité à la première pièce de connexion (17) et la deuxième portion de ligne (15) étant ou pouvant être connectée du côté de l'autre extrémité à la deuxième pièce de connexion (18).

4. Rouleau (2) selon l'une quelconque des revendications précédentes, **caractérisé en ce que** la connexion rotative (16) est disposée au niveau d'un tourillon (6), en particulier à l'extrémité libre frontale d'un tourillon (6).

5. Rouleau (2) selon l'une quelconque des revendications précédentes, **caractérisé en ce que** la connexion rotative (16) est disposée au niveau du rouleau de telle sorte que l'axe de rotation des deux pièces de connexion (17, 18) et l'axe de rotation du rouleau (2) coïncident.

6. Rouleau (2) selon l'une quelconque des revendications précédentes, **caractérisé en ce que** l'au moins un capteur (9) est un capteur piézoélectrique (9) et la ligne de signal (10) est une ligne électrique, le connecteur rotatif étant un connecteur rotatif électrique, en particulier un transmetteur à bagues collectrices.

7. Rouleau (2) selon l'une quelconque des revendications 1 à 6, **caractérisé en ce que** l'au moins un capteur (9) est un capteur optique (9), en particulier à fibres optiques, comme par exemple un capteur à fibre à réseau de Bragg (9), et la ligne de signal (10) est un conducteur à fibres optiques (10), le connecteur rotatif étant un connecteur rotatif optique, en particulier un connecteur rotatif à fibres optiques.

8. Rouleau (2) selon la revendication 7, **caractérisé en ce que** la première portion de ligne (13) est connectée du côté d'une extrémité à au moins une portion de capteur (14), qui fournit plusieurs capteurs (9) à fibres optiques disposés en rang les uns derrière les autres.

9. Rouleau (2) selon la revendication 8, **caractérisé en ce que** plusieurs portions de capteur (14) sont prévues.

10. Rouleau (2) selon l'une quelconque des revendications précédentes, **caractérisé en ce que** la première portion de ligne (13) de la ligne de signal (10) est guidée essentiellement dans le revêtement de rouleau (8) et/ou à l'intérieur du corps de base de rouleau cylindrique circulaire (5) .

11. Rouleau (2) selon l'une quelconque des revendications précédentes, **caractérisé en ce que** le rouleau (2) présente un diamètre inférieur à 850 mm, en particulier dans une plage de 100 mm à 800 mm.

12. Machine (1) de fabrication et/ou de traitement d'une bande fibreuse, en particulier d'une bande de papier, carton ou papier-tissu, comprenant un rouleau (2) pouvant tourner autour de son axe longitudinal selon l'une quelconque des revendications précédentes, et une unité d'impulsion et/ou de traitement de signaux (11, 12) connectée au rouleau (2) par le biais de la ligne de signal (10), **caractérisée en ce que** l'unité d'impulsion et/ou de traitement de signaux (11, 12) n'est pas disposée sur le rouleau (2) et ne tourne donc pas avec le rouleau (2) lors de la rotation du rouleau (2) autour de son axe longitudinal.

13. Machine (1) selon la revendication 12, **caractérisée en ce que** l'unité d'impulsion et/ou de traitement de signaux (11, 12) est une unité d'impulsion et/ou de traitement de signaux (11, 12) mobile.

14. Machine (1) selon la revendication 12 ou 13, **caractérisée en ce que** l'unité d'impulsion et/ou de traitement de signaux (11, 12) peut être connectée de manière amovible à la deuxième portion de ligne (15).

15. Machine (1) selon l'une quelconque des revendications précédentes 12 à 14, **caractérisée en ce que** l'unité d'impulsion de signaux (11) comprend une source de lumière et/ou **en ce que** l'unité de traitement de signaux (11, 12) comprend un récepteur de lumière, en particulier un spectromètre avec un polychromateur et/ou un enregistreur de données.

16. Machine (1) selon l'une quelconque des revendications précédentes 12 à 15, **caractérisée en ce que** le rouleau (2) forme avec un élément conjugué, en particulier un rouleau conjugué (3), un pinçage (4) dans lequel est mesurée la pression et/ou la température.

17. Procédé de mesure de pression et/ou de température dans un rouleau (2) selon l'une quelconque des revendications 1 à 11, dans lequel une unité d'impulsion et/ou de traitement de signaux (11, 12) mobile est utilisée, laquelle est connectée à la deuxième portion de ligne (15) pour effectuer une mesure, et est ensuite à nouveau séparée de la deuxième portion de ligne (15) après la réalisation de la mesure.
